# EUROPEAN PATENT SPECIFICATION

(11) **EP 0 654 475 B1**
(45) Date of publication and mention of the grant of the patent: **11.08.1999**
(21) Application number: 94308538.1
(22) Date of filing: 18.11.1994
(51) Int. Cl.: C07F 7/14

(54) **Catalytic preparation of beta-cyanoalkylsilane**
Katalytische Herstellung von Beta-Cyanoalkylsilanen
Préparation catalytique de bêta-cyanoalkylsilanes

(30) Priority: 23.11.1993 US 155895; 23.11.1993 US 155735; 23.11.1993 US 155899; 23.11.1993 US 155883
(43) Date of publication of application: 24.05.1995
(73) Proprietor: DOW CORNING CORPORATION, Midland, Michigan 48686-0994 (US)
(72) Inventor: Bank, Howard Marvin, Freeland, Michigan (US)
(74) Representative: Spott, Gottfried, Dr.

(56) References cited:
- DE-B- 1 087 603
- US-A- 2 907 784
- US-A- 3 099 670
- US-A- 3 153 662
- US-A- 3 448 135
- US-A- 5 326 894
- US-A- 5 332 848
- US-A- 5 359 107

## Description

The present invention is a process for the preparation of hydrolyzable beta-cyanoalkylsilanes by the catalytic addition of silicon hydrides to α,β-unsaturated olefinic nitriles to form β-cyanoalkylsilanes. This invention employs in the above process one of the following catalysts: 1) tertiary and quaternary amino ion exchange resins; 2) tetraalkylammonium halides supported on silica gel; 3) divinylbenzene/4-vinylpyridine copolymer based resins; 4) triorganophosphine oxide supported on an organic resin; or 5) triorganophosphine compounds.

The prior art is represented by one or more of the following patents: US-A-2,906,764; US-A-2,906,765; US-A-2,907,784; US-A-2,908,699; US-A-2,971,970; US-A-2,971,972; US-A-3,257,440; US-A-5,126,468; US-A-5,126,469; US-A-5,247,110; US-A-3 153 662; US-A-3 099 670; US-A-3 448 135 and DE-A-1 087 603. The prior art in the literature is represented by Pike et al., J. Org. Chem. 24, 1939-42, 1959; Pike et al., J. Org. Chem. 27, 2190-92, 1962; Rajkumar et al., Organometallics 8, 549-550, 1989; Belyakova et al., Zhurnal. Obshchei. Khimii 35:1183-1186, 1965; Ojimia et al., J. Organomet. Chem. 111:43-60 (1976) and Capka et al., J. Mol. Catalysis 11:313-330 (1981).

This invention provides a process for the catalytic addition of silicon hydrides to α,β-unsaturated olefinic nitriles to form β-cyanoalkylsilanes. The process is conducted at a temperature within a range of 50°C. to 250°C. Our process utilizes as a catalyst one of the following: 1) tertiary and quaternary amino ion exchange resins; 2) tetraalkylammonium halides supported on silica gel; 3) divinylbenzene/4-vinylpyridine copolymer based resins; 4) triorganophosphine oxide supported on an organic resin or 5) triorganophosphine compounds.

The present invention is a process for preparation of beta-cyanoalkylsilanes described by formula:

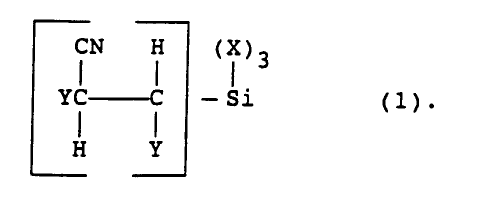

The process comprises contacting a silicon hydride described by formula HSiX₃ (2) with an unsaturated olefinic nitrile described by formula 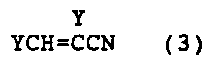 in the presence of a catalyst selected from a group consisting of tertiary amino ion exchange resins; quaternary amino ion exchange resins; divinylbenzene/4-vinylpyridine copolymer based resins; triorganophosphine supported on an organic resin; triorganophosphine oxide supported on an organic resin; triorganophosphine oxide and tetraalkylammonium halide described by formula R₄NX (4) supported on silica gel, where each R is an independently selected alkyl comprising 1 to 20 carbon atoms, at a temperature within a range of 50°C. to 250°C.; where X is a halogen and each Y is independently selected from hydrogen and lower alkyl radicals comprising one to eight carbon atoms.

The described process is applicable to the production of beta-cyanoalkylsilanes containing one silicon-bonded beta-cyanoalkyl radical, as described by Formula 1. Beta-cyanoalkylsilanes that can be made by the present process are beta-cyanoethyltrichlorosilane, beta-cyanopropyltrichlorosilane, beta-cyanobutyltrichlorosilane, beta-cyano-tert-butyltrichlorosilane, beta-cyanopentyltrichlorosilane, beta-cyanohexyltrichlorosilane, beta-cyanoheptyltrichlorosilane, beta-cyanooctyltrichlorosilane, alpha-methyl-beta-cyanoethyltrichlorosilane, alpha-ethyl-beta-cyanoethyltrichlorosilane, alpha-octyl-beta-cyanopropyltrichlorosilane, beta-cyanoethyltribromosilane and beta-cyanopropyltrifluorosilane. The preferred beta-cyanoalkylsilane made by the present process is beta-cyanoethyltrichlorosilane.

The silicon hydride, described by Formula 2, contains one silicon-bonded hydrogen atom and three silicon-bonded halogen atoms. The halogen atom, X, is selected from bromine, chlorine, fluorine and iodine. The preferred halogen is chlorine.

The silicon hydride is contacted with an α,β-unsaturated olefinic nitrile described by Formula 3. The α,β-unsaturated olefinic nitrile contains substituents Y which are independently selected from hydrogen and lower alkyl radicals comprising from one to eight carbon atoms. For example, Y is methyl, ethyl, propyl, butyl, tert-butyl, pentyl, hexyl, heptyl and octyl. Examples of the α,β-unsaturated olefinic nitrile include acrylonitrile, methacrylonitrile, crotononitrile, ethylacrylonitrile, 1-cyanobutene-1 and 2-cyanooctene-1. The preferred α,β-unsaturated olefinic nitrile is acrylonitrile.

The molar ratio of the silicon hydride to the α,β-unsaturated olefinic nitrile may be varied within wide limits, however no particular advantage is derived from employing a molar excess of either reactant. The use of molar excesses of either of the two reactants is not precluded. It is preferred that the molar ratio of silicon hydride to α,β-unsaturated olefinic nitrile be within a range of 0.5 to 1.5. In the most preferred embodiment of the invention, the molar ratio of silicon hydride to α,β-unsaturated olefinic nitrile is near 1.0.

The silicon hydride and α,β-unsaturated olefinic nitrile can be contacted in the presence of tetraalkylammonium halide, as described by formula (4), supported on silica gel as catalyst. In formula (4), each R is an independently selected alkyl comprising one to 20 carbon atoms. Preferred is when each R is an independently selected alkyl comprising one to ten carbon atoms. The substituent R is methyl, ethyl, propyl, butyl and decyl. Substituent X is a halogen selected from bromine, chlorine, fluorine and iodine. Preferred is when X is fluorine.

The method of support of tetraalkylammonium halide on the silica gel is not critical and standard methods known in the art are applicable such as adsorption or absorption. The silica gel is typically in the form of powders or beads. Preferred is when the silica gel is from 0.29 mm to 1.0 mm (18 to 50 mesh) in size. More preferred is when sufficient tetraalkylammonium halide is supported on the silica gel to provide approximately 1.1 mmol of halogen per gram of silica gel. A preferred catalyst for our process of this type is tetrabutylammonium fluoride supported on silica gel.

Alternatively, the silicon hydride and α,β-unsaturated olefinic nitrile are contacted in the presence of a catalyst selected from a group consisting of tertiary amino ion exchange resins; quaternary amino ion exchange resins and divinylbenzene/4-vinylpyridine copolymer based resins. General methods for making such catalysts are discussed in US-A 4,113,845.

The tertiary and quaternary amino ion exchange resins useful in the present invention are polymeric materials which are insoluble in trichlorosilane, the α,β-unsaturated olefinic nitriles and the products of the present process. Such insolubility can be achieved, in the case of linear, thermoplastic ion exchange resins by using resin of sufficiently high molecular weight, i.e. greater than 10,000, such that the polymers possess the requisite insolubility. Insolubility can be achieved by employing a cross-linked ion exchange resin, which may be infusible as well. However for purposes of this invention the degree of cross-linking need only be sufficient to meet the requisite insolubility requirements.

The amino functionality in the resin is a tertiary amino or quaternary amino group attached through carbon to the resin structure. Except for the nitrogen atoms or the halide ions of the amino functionality all of the resin is composed of carbon and hydrogen.

The ion exchange resins used in the present invention are those made from the copolymerization of monoolefinically unsaturated hydrocarbons and a polyolefinically unsaturated hydrocarbons. The monoolefinically unsaturated compounds are typically styrene, 4-chlorostyrene, 3-chlorostyrene, vinyltoluene and 4-chloromethylstyrene. The polyolefinically unsaturated compounds may be, for example, 1,4-divinylbenzene, divinyltoluenes and trivinylbenzene.

Such copolymers are well known and a number of them are commercial products which possess tertiary amino or quaternary amino functionality. They may be converted into cross-linked resins with conventional free radical addition catalysts such as peroxides. The chloro groups of the copolymer can be replaced by a condensation reaction with a secondary or tertiary alkylamine, arylamine or alkylarylamine; where each alkyl comprises one to 20 carbon atoms and each aryl comprises six to twelve carbon atoms. The tertiary amino ion exchange resin is formed by reacting the chloro groups of the copolymer with a secondary amine. The quaternary amino ion exchange resin is formed by reacting the chloro groups of the copolymer with a tertiary amine. Quaternization of the tertiary amine containing resin can be effected, for example, by reaction with a hydrocarbon halide such as an alkyl halide or aryl halide, to form the corresponding quaternary amine halide.

It is preferred that the amino ion exchange resin be of the macroreticular type described in Kirk-Othmer, Encyclopedia of Chemical Technology, Vol. 13, p. 689, 1981, John Wiley and Sons, Inc.

A preferred amino ion exchange resin for use in the present process is a cross-linked styrene/divinylbenzene copolymer resin having tertiary amino ion functionality or quaternary amino functionality. More preferred is when the tertiary amino ion functionality is dimethylamino and the quaternary amino functionality is trimethylamino chloride. Examples of amino ion exchange resins useful in the present invention are typified by Amberlyst™ A-21, A-26, A-27 and A-29, Rohm and Haas Company, Philadelphia, Pa.

Divinylbenzene/4-vinylpyridine catalysts are also available commercially as Reillex™ 402 and Reillex™ 425, Reilly Industries Inc., Indianapolis, IN. These catalysts may be employed in our process as beads or as powders. Generally, the smaller the size of the catalyst the greater the surface area and consequently the greater the activity of the catalyst. Examples of catalyst particle sizes useful in this invention are provided in the examples herein. The catalyst can be a macroreticulated resin formed from a divinylbenzene/4-vinylpyridine copolymer.

Finally, the silicon hydride and α,β-unsaturated olefinic nitrile can be contacted in the presence of a catalyst selected from organic resin supported triorganophosphine, organic resin supported triorganophosphine oxide and triorganophosphine oxide.

The organic resin support for this catalyst system can be any cross-linked hydrocarbon resin having carbon atoms capable of covalent bonding to phosphorous. For example, the support can be cross-linked resins made from copolymerized monoolefinically unsaturated hydrocarbons and polyolefinically unsaturated hydrocarbons as described for tertiary and quanternary amino ion exchange resins. A preferred organic resin support for triorganophosphine compounds is cross-linked styrene/divinylbenzene copolymer resin.

Supported triorganophosphines useful in our process are described by formula Y-R¹-PR²₂ and supported triorganophosphine oxides which are useful in our process are described by formula Y-R¹-PR²₂O, where Y is a carbon atom of the organic resin, R¹ is a divalent hydrocarbon radical comprising one to 10 carbon atoms and each R² is independently selected from monovalent hydrocarbon radicals comprising one to 10 carbon atoms. The divalent hydrocarbon radical R¹ is an alkylene of one to 10 carbon atoms or an arylene. Preferred is when R¹ is phenylene. The triorganophosphine or triorganophosphine oxide is covalently bonded to the support material through a divalent hydrocarbon radical. For example, R¹ can be the phenyl substituent of the styrene component of a styrene/divinylbenzene copolymer. The substituent R² is methyl, ethyl, butyl, tert-butyl and phenyl. A preferred supported catalyst in the present invention is a supported triorganophosphine where the organic resin support is a styrene/divinylbenzene copolymer resin, R¹ is a phenyl substituent of the styrene component of the copolymer resin and each R² is phenyl.

The catalyst can also be an unsupported triorganophosphine oxide as described by formula PR²₃O, where R² is as previously described. A preferred unsupported triorganophosphine oxide catalyst is triphenylphosphine oxide.

The amount of catalyst employed in the present process in relation to the amount of α,β-unsaturated olefinic nitrile may be varied within wide limits. It is dependent upon such conditions as the temperature at which the process is run, the structure of the reactants, the specific catalyst, the surface area of the catalyst and whether the process is run as a batch or continuous process. In general, the process can be run under conditions where the catalyst is present at 0.1 to 50 weight percent of a mixture comprising the catalyst, the α,β-unsaturated olefinic nitrile and the silicon hydride. Preferred is when the catalyst comprises 0.5 to 30 weight percent of the mixture. For the tetraalkylammonium halide catalyst, the amounts given are expressed as the combined weight of silica gel and tetraalkylammonium halide.

The silicon hydride, the α,β-unsaturated olefinic nitrile and the catalyst are contacted in a suitable reactor of standard design. The type of reactor is not critical. The process can be run as a batch process, a semi-batch process or a continuous process. A preferred process is where the reaction is conducted as a continuous process in a packed-bed reactor.

The temperature for conducting the process can be within a range of 50°C. to 250°C. It is preferred that the temperature be within a range greater than 80°C. to 200°C. Generally, higher temperatures allow the use of a lower catalyst concentration.

The pressure under which the process is conducted is not critical. Generally, the process can be run at a gauge pressure within a range of 0 to 6.9 MPa (0 psig to 1000 psig). Preferred is a gauge pressure within a range of 0 to 0.69 MPa (0 psig to 100 psig).

The time required for conducting the process may vary depending on the particular silicon hydride, α,β-unsaturated olefinic nitrile, temperature and catalyst concentration employed. In general, reaction times of 0.1 to 30.0 hours are useful. A preferred reaction time is 0.5 to 20.0 hours.

The following examples are given to illustrate the present invention.

### Example 1

The ability of tetrabutylammonium fluoride supported on silica gel to catalyze the addition of trichlorosilane to acrylonitrile to form β-cyanoethyltrichlorosilane was evaluated.

The evaluation was conducted in a sealed glass tube purged with argon. About 0.026 g catalyst was placed in the tube and 2 mL of a mixture of 0.0122 mole of trichlorosilane and 0.0116 mole of acrylonitrile was added to the tube. The tube was sealed and heated for 2 hours at 150°C. The catalyst tested consisted of tetrabutylammonium fluoride supported on silica gel, Aldrich Chemical Company, Milwaukee, WI, stated to have 1.1 mmol fluorine per gram of silica gel.

A similar comparison run was made using 0.083 g of a material consisting of tetrabutylammonium fluoride supported on alumina, Aldrich Chemical Company. This material was not catalytic in the process.

The results of these runs are presented in Table 1. The contents of individual tubes were analyzed by gas liquid chromatography (GLC) using a thermal conductivity detector (TCD). The results are expressed as the area percent (Area %) under the GLC-TCD trace for β-cyanoethyltrichlorosilane, as a percentage of the total area under the GLC-TCD trace.

**TABLE 1**

| Reaction of Trichlorosilane with Acrylonitrile in Presence of Supported Tetrabutylammonium Fluoride | | |
|---|---|---|
| Run No. | Support Material | Area % β-Cyanoethyltrichlorosilane |
| 1 | silica gel | 79.3 |
| 2 | alumina | 0.0 |

### Example 2

The ability of a styrene/divinylbenzene copolymer based resin containing tertiary amino functionality to catalyze the addition of trichlorosilane to acrylonitrile to form β-cyanoethyltrichlorosilane was evaluated in a series of runs.

The runs were conducted in sealed glass tubes purged with argon. The runs were conducted by placing the weight of dry catalyst given in Table 2 into a tube, then adding to each tube 2 mL of a mixture of 0.0124 mole of trichlorosilane and 0.0113 mole of acrylonitrile. The tubes were sealed and then heated for 2 hours at either 120°C. or 170°C. The catalyst tested consisted of Amberlyst™ A-21, Rohm and Haas Company, Philadelphia, Pa. Amberlyst™ A-21 is described as a styrene/divinylbenzene copolymer based resin having dimethyl tertiary amino functionality and an effective size of 0.40 mm to 0.55 mm.

The results of these runs are presented in Table 2. The contents of individual tubes were analyzed by GLC using TCD. The results are expressed as the Area % under the GLC-TCD trace for beta-cyanoethyltrichlorosilane, as a percentage of the total area under the GLC-TCD trace.

**TABLE 2**

| Amberlyst™ A-21 Catalyzed Reaction of Trichlorosilane with Acrylonitrile | | | |
|---|---|---|---|
| Run No. | Catalyst Weight(g) | Temperature °C. | Area % β-Cyanoethyltrichlorosilane |
| 1 | 0.0142 | 120 | 2.0 |
| 2 | 0.0184 | 170 | 80.0 |

### Example 3

The ability of a styrene/divinylbenzene copolymer based resin containing quaternary amino functionality to catalyze the addition of trichlorosilane to acrylonitrile to form β-cyanoethyltrichlorosilane was evaluated in a series of runs.

The runs were conducted in sealed glass tubes purged with argon. The runs were conducted by placing the weight of dry catalyst given in Table 3 into a tube, then adding to each tube 2 mL of a mixture of 0.0124 mole of trichlorosilane and 0.0113 mole of acrylonitrile. The tubes were sealed and heated for 2 hours at either 120°C. or 170°C. The catalyst tested consisted of Amberlyst™ A-27, Rohm and Haas Company, Philadelphia, Pa. Amberlyst™ A-27 is described as a styrene/divinylbenzene copolymer based resin having trimethyl tertiary amino functionality, with chloride as the cation and an effective size of 0.40 mm to 0.50 mm.

The results of these runs are presented in Table 3. The contents of individual tubes were analyzed by GLC-TCD. The results are expressed as Area % under the GLC-TCD trace for beta-cyanoethyltrichlorosilane, as a percentage of the total area under the GLC-TCD trace.

**TABLE 3**

| Amberlyst™ A-27 Catalyzed Reaction of Trichlorosilane with Acrylonitrile | | | |
|---|---|---|---|
| Run No. | Catalyst Weight (g) | Temperature °C. | Area % β-Cyanoethyltrichlorosilane |
| 1 | 0.0316 | 120 | 7.1 |
| 2 | 0.0366 | 170 | 75.7 |

### Example 4

The ability of a divinylbenzene/4-vinylpyridine copolymer based resin to catalyze the addition of trichlorosilane to acrylonitrile to form β-cyanoethyltrichlorosilane was evaluated in a series of runs.

The runs were conducted in sealed glass tubes purged with argon. The runs were conducted by placing the weight and type of catalyst given in Table 4 into a tube, then adding to each tube 2 mL of a mixture of 0.0122 mole of trichlorosilane and 0.0116 mole of acrylonitrile. The tubes were sealed then heated for two hours at 150°C. The catalyst tested consisted of Reillex™ 425 (Reilly Industries Inc., Indianapolis, IN) and Reillex™ 402. Reillex™ 425 is divinylbenzene/4-vinylpyridine copolymer resin beads of size 0.29 mm to 1.0 mm (18-50 mesh). Reillex™ 402 is divinylbenzene/4-vinylpyridine copolymer resin powder of approximately 0.25 mm (60 mesh). The catalyst used in run number 4 was reused for run number 5.

The results of these runs are presented in Table 4. The contents of individual tubes were analyzed by GLC using TCD. The results are expressed as Area % under the GLC-TCD trace for β-cyanoethyl-trichlorosilane, as a percentage of the total area under the GLC-TCD trace.

**Table 4**

| Divinylbenzene/4-Vinylpyridine Copolymer Based Resin Catalyzed Reaction of Trichlorosilane With Acrylonitrile | | | |
|---|---|---|---|
| Run No. | Catalyst Type | Catalyst Wt. (g) | Area % β-Cyanoethyltrichlorosilane |
| 1 | Reillex 425 | 0.326 | 67.0 |
| 2 | Reillex 425 | 0.034 | 21.3 |
| 3 | Reillex 425 | 0.011 | 5.5 |
| 4 | Reillex 425 | 0.304 | 66.2 |
| 5 | *Reillex 425 | *.* | 63.9 |
| 6 | Reillex 402 | 0.011 | 28.5 |

| | | | |
|---|---|---|---|
| (*The catalyst from run number 4 was reused in this run.) | | | |

### Example 5

The ability of triphenylphosphine supported on a styrene/divinylbenzene copolymer based resin to catalyze the addition of trichlorosilane to acrylonitrile to form β-cyanoethyltrichlorosilane was evaluated in a series of runs.

The runs were conducted in sealed glass tubes purged with argon. The runs were conducted by placing a weight of catalyst as described in Table 5 into a tube, then adding to each tube 2 mL of a mixture of 5 mole percent excess trichlorosilane and acrylonitrile. The tubes were sealed then heated for 2 hours at 150°C. Unsupported triphenylphosphine was tested for comparison purposes. The test catalyst comprised triphenylphosphine supported on a cross-linked styrene/divinylbenzene copolymer resin. The supported catalyst was purchased from Alfa, Ward Hill, MA. The supported catalyst is reported to comprise 3-7 percent phosphorous and have the formula {CH(C₆H₄P(C₆H₅)₂)CH₂}ₓ.

The results of these runs are presented in Table 5. The contents of individual tubes were analyzed by GLC using TCD. The results are expressed as Area % under the GLC-TCD trace for beta-cyanoethyltrichlorosilane, as a percentage of the total area under the GLC-TCD trace.

**TABLE 5**

| Triorganophosphine Catalyzed Reaction of Trichlorosilane with Acrylonitrile | | |
|---|---|---|
| Catalyst | Catalyst Weight(g) | Area % β-Cyanoethyltrichlorosilane |
| Ph₃P | 0.029 | 68.4 |
| Supported Ph₃P | 0.590 | 66.2 |

### Example 6

The ability of unsupported triphenylphosphine oxide to catalyze the addition of trichlorosilane to acrylonitrile to form β-cyanoethyltrichlorosilane was evaluated. The evaluation was conducted by placing 0.037 g of triphenylphosphine oxide into a tube, then adding to the tube 2 mL of a mixture of 5 mole percent excess trichlorosilane and acrylonitrile. The tube was sealed and heated for two hours at 150°C. The composition of the tube content was analyzed as described in Example 5. The content of the tube was found to comprise 78.4 Area % β-cyanoethyltrichlorosilane.

## Claims

1. A process for preparation of beta-cyanoalkylsilanes described by formula 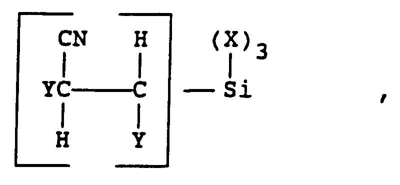 the process comprising contacting a silicon hydride described by formula HSiX₃, with an unsaturated olefinic nitrile described by formula 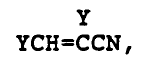 in the presence of a catalyst selected from a group consisting of tertiary amino ion exchange resins; quaternary amino ion exchange resins; divinylbenzene/4-vinylpyridine copolymer based resins; triorganophosphine supported on an organic resin; triorganophosphine oxide supported on an organic resin; triorganophosphine oxide and tetraalkylammonium halide described by formula R₄NX supported on silica gel, where each R is an independently selected alkyl comprising 1 to 20 carbon atoms, at a temperature within a range of 50°C. to 250°C.; where X is a halogen and each Y is independently selected from hydrogen atom and lower alkyl radicals comprising one to eight carbon atoms.

2. A process according to claim 1 where the unsaturated olefinic nitrile is selected from acrylonitrile, methacrylonitrile, crotononitrile, ethylacrylonitrile, 1-cyanobutene-1 and 2-cyanooctene-1.

3. A process according to claim 1 where the prepared beta-cyanoalkylsilane is beta-cyanoethyltrichlorosilane.

4. A process according to claim 1 where the silicon hydride is trichlorosilane, the olefinic nitrile is acrylonitrile and the temperature is within a range of 80°C. 200°C.

5. A process according to claim 1 where the mole ratio of silicon hydride to unsaturated olefinic nitrile is within the range of 0.5 to 1.5.

6. A process according to claim 1 where the process is conducted for a time period of 0.1 to 30 hours.

7. A process according to claim 1 where the catalyst is a cross-linked styrene/divinylbenzene copolymer resin having tertiary amino functionality formed by attachment of a dialkylamino group through a carbon atom to the resin.

8. A process according to claim 1 where the catalyst is a cross-linked styrene/divinylbenzene copolymer resin having a quaternary amino functionality formed by attachment of a trialkylamino group through carbon to the resin.

9. A process according to claims 7 or 8 where the trialkylamino group is trimethylamino.

10. A process according to claims 7 or 8 where the resin is of the macroreticular type.

11. A process according to claim 1 where the silica gel has supported on it sufficient tetraalkylammonium halide to provide about 1.1 mmol of halogen per gram of silica gel and the particle size of the silica gel is from 0.29 to 1.0 mm (18 to 50 mesh).

12. A process according to claim 1 where the catalyst is present at 0.1 to 50 weight percent of a mixture comprising the catalyst, the α,β-unsaturated olefinic nitrile and the silicon hydride.

13. A process according to claim 1 where the process is conducted as a continuous process in a packed-bed reactor.

14. A process according to claim 1 where the catalyst is an organic resin supported triorganophosphine described by formula Y-R¹-PR²₂, Y is a carbon atom of the organic resin, R¹ is a divalent hydrocarbon radical comprising one to 10 carbon atoms and each R² is independently selected from monovalent hydrocarbon radicals comprising one to 10 carbon atoms.

15. A process according to claim 14 where the organic resin is a cross-linked styrene/divinylbenzene copolymer, R¹ is a phenyl substituent of the styrene component of the copolymer and each R² is phenyl.

16. A process according to claim 14 where the catalyst is an organic resin supported triorganophosphine oxide.

17. A process according to claim 1 where the catalyst is triphenylphosphine oxide.

## Patentansprüche

1. Verfahren zur Herstellung von β-Cyanoalkylsilan der Formel 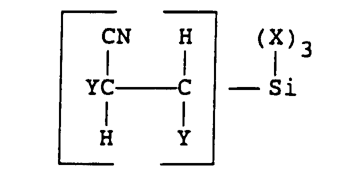 durch Inberührungbringen eines Siliciumhydrids der Formel HSiX₃ mit einem ungesättigten olefinischen Nitril der folgenden Formel 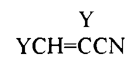 in Gegenwart eines Katalysators, der aus tertiären Amino-Ionenaustauschharzen, quaternären Ammonium-lonenaustauschharzen, Harzen auf Divinylbenzol/4-Vinylpyridin-Copolymerbasis; auf einem organischen Harz als Träger befindlichem Triorganophosphin, auf einem organischen Harz als Träger befindlichem Triorganophosphinoxid, Triorganophosphinoxid und Tetraalkylammoniumhalogenid der Formel R₄NX, das auf Silicagel als Träger aufgetragen ist, wobei jeder Rest R unabhängig voneinander aus Alkyl mit 1 bis 20 Kohlenstoffatom(en) ausgewählt ist und X für ein Halogen steht, ausgewählt ist, bei einer Temperatur im Bereich von 50-250°C, wobei jeder Rest Y unabhängig voneinander aus einem Wasserstoffatom und Niedrigalkylresten mit 1 bis 8 Kohlenstoffatom(en) ausgewählt ist.

2. Verfahren nach Anspruch 1, wobei das ungesättigte olefinische Nitril aus Acrylnitril, Methacrylnitril, Krotonnitril, Ethylacrylnitril, 1-Cyanobuten-1 und 2-Cyanoocten-1 ausgewählt ist.

3. Verfahren nach Anspruch 1, wobei das hergestellte β-Cyanoalkylsilan β-Cyanoethyltrichlorsilan ist.

4. Verfahren nach Anspruch 1, wobei das Siliciumhydrid Trichlorsilan ist, das olefinische Nitril aus Acrylnitril besteht und die Temperatur in einem Bereich von 80-200°C liegt.

5. Verfahren nach Anspruch 1, wobei das Molverhältnis Siliciumhydrid/ungesättigtes olefinisches Nitril in einem Bereich von 0,5 bis 1,5 liegt.

6. Verfahren nach Anspruch 1, wobei das Verfahren während einer Zeitdauer von 0,1 bis 30 h durchgeführt wird.

7. Verfahren nach Anspruch 1, wobei der Katalysator aus einem vernetzten Styrol/Divinylbenzol-Copolymerharz mit tertiärer Aminofunktionalität, das durch Binden einer Dialkylaminogruppe über ein Kohlenstoffatom an das Harz gebildet wurde, besteht.

8. Verfahren nach Anspruch 1, wobei der Katalysator aus einem vernetzten Styrol/Divinylbenzol-Copolymerharz mit quaternärer Ammoniumionenfunktionalität besteht, das durch Binden einer Trialkylaminogruppe über ein Kohlenstoffatom an das Harz gebildet wurde.

9. Verfahren nach Anspruch 7 oder 8, wobei die Trialkylaminogruppe eine Trimethylaminogruppe ist.

10. Verfahren nach Anspruch 7 oder 8, wobei das Harz ein solches vom makroporösen Typ ist.

11. Verfahren nach Anspruch 1, wobei auf das Silicagel ausreichend Tetraalkylammoniumhalogenid aufgetragen ist, um etwa 1,1 mmol Halogen pro g Silicagel bereitzustellen und wobei die Teilchengröße des Silicagels zwischen 0,29 und 1,0 mm (18-50 mesh) liegt.

12. Verfahren nach Anspruch 1, wobei der Katalysator in einer Menge von 0,1 bis 50 Gew.-% eines den Katalysator, das α,β-ungesättigte olefinische Nitril und das Siliciumhydrid umfassenden Gemisches vorhanden ist.

13. Verfahren nach Anspruch 1, wobei das Verfahren als kontinuierliches Verfahren in einem Füllkörperreaktor durchgeführt wird.

14. Verfahren nach Anspruch 1, wobei der Katalysator aus einem auf organisches Harz als Träger aufgetragenen Triorganophosphin der Formel Y-R¹-PR²₂ besteht, worin Y für ein Kohlenstoffatom des organischen Harzes steht, R¹ einen zweiwertigen Kohlenwasserstoffrest mit 1 bis 10 Kohlenstoffatom(en) bedeutet und jeder Rest R² unabhängig voneinander aus einwertigen Kohlenwasserstoffresten mit 1 bis 10 Kohlenstoffatom(en) ausgewählt ist.

15. Verfahren nach Anspruch 14, wobei das organische Harz aus einem vernetzten Styrol/Divinylbenzol-Copolymer besteht, R¹ für einen Phenylsubstituenten der Styrolkomponente des Copolymers steht und jeder Rest R² Phenyl bedeutet.

16. Verfahren nach Anspruch 14, wobei der Katalysator aus einem auf organisches Harz als Träger aufgetragenen Triorganophosphinoxid besteht.

17. Verfahren nach Anspruch 1, wobei der Katalysator Triphenylphosphinoxid ist.

## Revendications

1. Procédé de préparation de bêta-cyanoalkylsilanes représentés par la formule 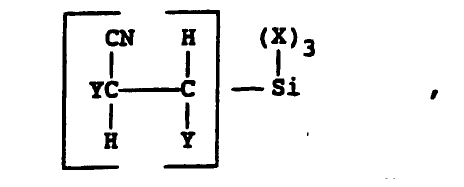 le procédé comprenant la mise en contact d'un hydrure de silicium représenté par la formule HSiX₃, avec un nitrile oléfinique insaturé représenté par la formule 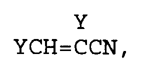 en présence d'un catalyseur choisi dans le groupe constitué par les résines échangeuses d'ions à groupe amino tertiaire ; les résines échangeuses d'ions à groupe amino quaternaire ; les résines à bases de copolymère divinylbenzène/4-vinylpyridine ; une triorganophosphine supportée sur une résine organique ; un oxyde de triorganophosphine supporté sur une résine organique ; un oxyde de triorganophosphine, et un halogénure de tétraalkylammonium représenté par la formule R₄NX supporté sur du gel de silice, où chaque R est un groupe alkyle choisi indépendamment comprenant 1 à 20 atomes de carbone, à une température dans la gamme de 50 °C à 250 °C ; où X est un halogène et chaque Y est indépendamment choisi parmi l'atome d'hydrogène et les radicaux alkyles inférieurs comprenant un à huit atomes de carbone.

2. Procédé selon la revendication 1, dans lequel le nitrile oléfinique insaturé est choisi parmi l'acrylonitrile, le méthacrylonitrile, le crotononitrile, l'éthylacrylonitrile, le 1-cyanobutène-1 et le 2-cyano-octène-1.

3. Procédé selon la revendication 1, dans lequel le bêta-cyanoalkylsilane préparé est le bêta-cyanoéthyltrichlorosilane.

4. Procédé selon la revendication 1, dans lequel l'hydrure de silicium est le trichlorosilane, le nitrile oléfinique est l'acrylonitrile et la température est dans la gamme de 80 °C à 200 °C.

5. Procédé selon la revendication 1, dans lequel le rapport molaire de l'hydrure de silicium au nitrile oléfinique insaturé est dans la gamme de 0,5 à 1,5.

6. Procédé selon la revendication 1, le procédé étant mis en oeuvre pendant une période de temps de 0,1 à 30 heures.

7. Procédé selon la revendication 1, dans lequel le catalyseur est une résine de copolymère styrène/divinylbenzène réticulé ayant une fonctionnalité amino tertiaire formée par l'attachement d'un groupe dialkylamino à la résine par l'intermédiaire d'un atome de carbone.

8. Procédé selon la revendication 1, dans lequel le catalyseur est une résine de copolymère styrène/divinylbenzène réticulé ayant une fonctionnalité amino quaternaire formée par l'attachement d'un groupe trialkylamino à la résine par l'intermédiaire d'un carbone.

9. Procédé selon les revendications 7 ou 8, dans lequel le groupe trialkylamino est le groupe triméthylamino.

10. Procédé selon les revendications 7 ou 8, dans lequel la résine est du type macroréticulaire.

11. Procédé selon la revendication 1, dans lequel sur le gel de silice est supporté suffisamment d'halogénure de tétraalkylammonium pour fournir environ 1,1 mmole d'halogène par gramme de gel de silice, et la taille des particules du gel de silice est de 0,29 à 1,0 mm (18 à 50 mesh).

12. Procédé selon la revendication 1, dans lequel le catalyseur est présent à raison de 0,1 à 50 % en poids d'un mélange comprenant le catalyseur, le nitrile oléfinique α,β-insaturé et l'hydrure de silicium.

13. Procédé selon la revendication 1, le procédé étant mis en oeuvre sous la forme d'un procédé continu dans un réacteur à lit tassé.

14. Procédé selon la revendication 1, dans lequel le catalyseur est une triorganophosphine représentée par la formule Y-R¹-PR²₂ supportée sur une résine organique, Y est un atome de carbone de la résine organique, R¹ est un radical hydrocarboné divalent comprenant un à 10 atomes de carbone et chaque R² est indépendamment choisi parmi les radicaux hydrocarbonés monovalents comprenant un à 10 atomes de carbone.

15. Procédé selon la revendication 14, dans lequel la résine organique est un copolymère styrène/divinylbenzène réticulé, R¹ est un substituant phényle du constituant styrène du copolymère et chaque R² est un groupe phényle.

16. Procédé selon la revendication 14, dans lequel le catalyseur est un oxyde de triorganophosphine supporté sur une résine organique.

17. Procédé selon la revendication 1, dans lequel le catalyseur est l'oxyde de triphénylphosphine.
